# EUROPÄISCHE PATENTANMELDUNG

(11) **EP 1 930 132 A1**
(43) Veröffentlichungstag der Anmeldung: **11.06.2008**
(21) Anmeldenummer: 07017249.9
(22) Anmeldetag: 04.09.2007
(51) Int. Cl.: B25J 17/02

(54) **Vorrichtung, insbesondere zum Positionieren von Objekten**

(30) Priorität: 29.09.2006 DE 102006046758
(71) Anmelder: ABB PATENT GmbH, 68526 Ladenburg (DE)
(72) Erfinder: Soetebier, Sven, 68526 Ladenburg (DE); Kock, Soenke, 72483 Västeras (SE); Waldi, Wolfgang, 69226 Nußloch-Maisbach (DE)
(74) Vertreter: Miller, Toivo

(57) **Zusammenfassung**

Es wird eine Vorrichtung insbesondere zum Positionieren von Objekten (1), mit längeneinstellbaren Stützen (2), mit einem Basisteil (3), mit einer Aufnahme (4) für das Objekt (1), wobei die Stützen (2) zwischen dem Basisteil (3) und der Aufnahme (4) angeordnet und dort jeweils beweglich gelagert sind, und mit Antrieb und Steuerung zur Einstellung der Stützen (2) angegeben. Zumindest ein Stützenpaar (5) aus zwei Stützen (2) ist gebildet so dass sich die beiden Stützen (2) des Stützenpaares (5) parallel erstrecken, wodurch sich die Form eines Parallelogramms ergibt.

## Beschreibung

Die vorliegende Erfindung betrifft eine Vorrichtung insbesondere zum Positionieren von wenigstens einem Objekt, mit längeneinstellbaren Stützen, mit einem Basisteil, mit einer Aufnahme für das Objekt, wobei die Stützen zwischen dem Basisteil und der Aufnahme angeordnet und dort jeweils gelenkig gelagert sind, und mit einem Antrieb und einer Steuerung zur Einstellung der Stützen, nach Patent DE 10 2006 011 823.5.

Solche Vorrichtungen zum Positionieren dienen dazu, ein Objekt in eine gewünschte Position zu verbringen und in dieser zu halten. Ein solches Objekt ist häufig ein Werkstück, das mit Hilfe der Vorrichtung in diese Position gebracht und dort festgehalten wird, so dass dann eine Bearbeitung, z. B. durch einen Roboter, erfolgen kann. Auch kann mit einer solchen Vorrichtung bei Bedarf das Objekt in weitere Positionen verfahren werden, in denen weitere Bearbeitungsschritte erfolgen können. Das Objekt kann auch ein Werkzeug sein, das zwecks Bearbeitung eines Werkstückes in unterschiedliche Positionen verbracht wird.

Ein mögliches Einsatzgebiet einer Vorrichtung zum Positionieren von Objekten findet sich beispielsweise in der Automobilindustrie, wo in automatischen Fertigungslinien z.B. Karosserien etc. automatisch mittels Robotern bearbeitet werden.

Die Stützen sind längenverstellbar und können im Raum verschwenkt werden. Die Bewegungen der Stützen werden durch Antriebe erzeugt, Steuereinrichtungen steuern den Bewegungsablauf und die Endkoordinaten der gewünschten Position.

So ist beispielsweise aus der US 5272805 eine Vorrichtung zum Positionieren eines Objektes bekannt geworden, die eine Platte mit mehreren unabhängig voneinander angeordneten Stützen aufweist, auf denen ein Werkstück, das aus mehreren Teilen zusammengesetzt sein kann, positioniert werden kann. Bei der Vorrichtung ist eine Regeleinrichtung vorgesehen, die die aufgrund des Gewichtes des Objektes in die Stützen eingeleiteten Kräfte misst und die Stützen demgemäß einstellt, so dass das Gewicht des Objektes gehalten werden kann, auch dann, wenn beispielsweise auf das Objekt äußere sich ändernde Kräfte einwirken. Zwei oder mehr von den Stützen können mechanisch miteinander gekoppelt sein, um eine besondere Bewegung des Objektes unter Einschränkung von Freiheitsgraden zu erzeugen. Die miteinander gekoppelten Stützen stehen dabei winklig zueinander, so dass an ihnen Biege- oder Torsionsmomente angreifen können. Die bekannte Vorrichtung erfordert außerdem einen hohen Kostenaufwand wegen der Steuer- und Regeleinrichtung. Die Stützen müssen mit Sensoren ausgestattet sein, die geeignete Signale an die Steuer- und Regeleinrichtung senden. Wenn Objekte größeren Gewichtes positioniert werden sollen, sind die Anforderungen an die Steifigkeit ebenfalls erhöht und es bedarf einer entsprechend aufwendigeren Steuer- und Regeleinrichtung. Die Vorrichtung kann auf unterschiedlichste Anforderungen und Anwendungsfälle nicht flexibel reagieren, wodurch die Anwendungsmöglichkeiten dieser Vorrichtung relativ begrenzt sind.

Aus der US-5987726 ist eine Vorrichtung der eingangs genannten Art bekannt geworden. Diese besitzt eine Basisplatte und eine Aufnahmeplatte, die mit Stützen miteinander verbunden sind, die in ihrer Länge veränderbar sind. Die einzelnen Stützen sind in einem Winkel zueinander geneigt und unabhängig voneinander zu betätigen. Auch hier sind die Stützen hohen Biege- und Torsionsmomenten unterworfen, und die Steuer-und Regeleinrichtungen zum Verstellen der Stützen sind aufwendig.

Aufgabe der Erfindung ist es, die Vorrichtung der eingangs genannten Art weiter zu verbessern, wobei die Stabilität und Flexibilität für unterschiedliche Anwendungen erhöht und die Herstellungs- und Wartungskosten vermindert werden.

Diese Aufgabe wird erfindungsgemäß durch die Merkmale des Patentanspruches 1 gelöst.

Danach ist eine Vorrichtung der in Rede stehenden Art derart weitergebildet, dass zumindest ein Stützenpaar aus zwei Stützen vorgesehen ist und dass sich die beiden Stützen des Stützenpaares parallel erstrecken, so dass sich die Form eines Parallelogramms ergibt.

Erfindungsgemäß ist erkannt worden, dass die Stabilität verbessert werden kann und auch verschleißbedingte Wartungs- und Reparaturkosten vermieden werden können, wenn aus je zwei parallelen Stützen ein Stützenpaar gebildet wird, das die Form eines Parallelogramms aufweist. Auf diese Weise ist sichergestellt, dass einerseits jede Stütze einzeln Kräfte aufnimmt, andererseits aber auch jedes Stützenpaar als Kräftepaar betrachtet auch ein Moment aufnehmen kann.

Für die Anordnung der Antriebs- und Steuereinheiten bestehen dabei folgende Möglichkeiten:
Gemäß einer ersten Ausführungsform ist wenigstens eine Stütze wenigstens eines Stützenpaares mit einer Antriebs- und Steuereinrichtung zur Längeneinstellung ansteuerbar.

Dabei kann gemäß einer weiteren vorteilhaften Ausgestaltung der Erfindung die Antriebseinrichtung der wenigstens einen Stütze räumlich zugeordnet und mit dieser bewegbar sein. Dabei können die Antriebs- und Steuereinrichtung eine räumliche Einheit miteinander bilden. Es besteht aber auch die Möglichkeit, dass die Steuereinrichtung räumlich von der Antriebseinrichtung getrennt angeordnet, gegebenenfalls in einem Schaltschrank untergebracht ist.

Die Stützen des Stützenpaares sind aufnahmeseitig und basisteilseitig beweglich d. h. gelenkig gelagert, damit die Einstellung des Objekts im Raum vorgenommen werden kann. Die Aufnahme selbst ist jedoch mit dem aufnahmeseitigen Ende des Stützenpaares fest verbunden, so dass die einzelnen Stützen um ihre Gelenkachse schwenken können, jedoch der räumliche Abstand der Gelenkachsen unveränderlich ist. Die Aufnahme kann damit in alle drei Richtungen des räumlichen Koordinatensystems bewegt werden, auch die winklige Lage der Aufnahme zum Baisteil ist entsprechend dem Bedarf einstellbar. Natürlich kann auch das Basisteil in seiner Lage verändert werden.

Das Basisteil kann gemäß einer Ausführungsform als Plattform vorliegen, auf deren Oberseite das Stützenpaar angeordnet ist. Denkbar ist aber auch jede andere Form von Tragwerk, das ein räumlich definiertes Anordnen des Stützenpaares ermöglicht. Für eine höhere Stabilität im Hinblick auf zu positionierende Objekte unterschiedlicher Größe und Gewicht ist es von Vorteil, wenn sechs Stützen vorgesehen sind, da dadurch hohe Torsionsmomente in den Stützen vermieden werden und Zug- und Druckkräfte dominieren. Im Sinne der Minimierung der Herstellungskosten ist dann wiederum sinnvoll, diese sechs Stützen als drei Stützenpaare auszubilden.

Eine im Hinblick auf eine kompakte Konstruktion vorteilhafte Ausführung der erfindungsgemäßen Vorrichtung mit drei Stützpaaren zeichnet sich dadurch aus, dass die basisteilseitigen Enden und die aufnahmeseitigen Enden der drei Stützenpaare jeweils im Sinne eines gedachten Dreiecks angeordnet sind. Im Hinblick auf eine hohe Stabilität ist es bevorzugt, den Abstand der aufnahmeseitigen Enden der drei Stützenpaare, geringer auszubilden als den Abstand der basisteilseitigen Enden der drei Stützenpaare, so dass das gedachte Dreieck im Bereich der Aufnahme kleiner ist als das gedachte Dreieck im Bereich des Basisteils.

Das gedachte Dreieck kann erfindungsgemäß gleichseitig sein.

Aber auch eine gleichschenklige Ausbildung des gedachten Dreiecks ist möglich. Diese gleichschenklige Ausgestaltung des Dreieckes führt zumindest in einer Raumrichtung zu einer noch kompakteren Bauweise, da es Winkel kleiner 60° aufweisen kann. Hierdurch kann der Platz- bzw. Raumbedarf optimiert werden. Dies ist beispielsweise bei der Anordnung der Vorrichtung zum Positionieren in einer Fertigungsstrasse interessant, da hier regelmäßig wenig Raum zwischen den Robotern, Förderbändern, Bauteilen usw. zur Verfügung steht.

Schließlich können das durch die basisteilseitigen Enden gebildete gedachte Dreieck und das durch die aufnahmeseitigen Enden gebildete gedachte Dreieck zueinander verdreht sein. In bestimmten Grenzen kann hierdurch die Grundfläche der Basisplattform zuzüglich der weiteren Bauteile minimiert werden. Außerdem kann eine Vorrichtung zum Positionieren flexibel auf unterschiedliche Anforderungen reagieren, indem der Verdrehwinkel zwischen dem aufnahmeseitigen gedachten Dreieck und basisteilseitigen gedachten Dreieck verändert wird. Je kleiner der Verdrehwinkel dabei ist, umso höher ist die Steifigkeit. Auch werden die Steifigkeit in horizontaler Richtung und die Biegesteifigkeit erhöht. Untersuchungen haben gezeigt, dass die Verteilung der Kräfte auf die sechs Stützen in der verdrehten Variante gleichmäßiger ist.

Eine weitere vorteilhafte Ausgestaltung der erfindungsgemäßen Vorrichtung mit mindestens drei Stützenpaaren geht dahin, dass die basisteilseitigen Enden zumindest zweier Stützenpaare sich gegenüberliegend auf einer ersten und zweiten Linie, die parallel zueinander verlaufen (Schwenkachsen B) und die basisteilseitigen Enden des dritten Stützenpaares auf einer dritten Linie liegen, die senkrecht zu der ersten und zweiten Linie verläuft und die die Schwenkachse (B) des dritten Stützenpaares bildet.

Bezüglich der gegenüberliegenden Stützenpaare können zwei Anordnungsvarianten hinsichtlich der basisteilseitigen Enden vorgesehen sein. Zum einen können die basisteilseitigen Enden der gegenüberliegenden Stützenpaare in Richtung ihrer parallelen Lagerachsen keinen Abstand zueinander aufweisen, so dass von einer diesbezüglichen Symmetrie gesprochen werden kann. Zum anderen könnten die basisteilseitigen Enden der gegenüberliegenden Stützenpaare in Richtung ihrer parallelen Lagerachsen auch zueinander beabstandet sein, so dass es zu einer versetzten Anordnung kommt. Beide Anordnungsvarianten eröffnen Spielraum für platzsparende und kostengünstige Lösungen für bestimmte Anwendungen, wenn auch die Stabilitätsanforderungen bei der Aufnahme von Drehmomenten ein wenig geringer sein müssen.

Dabei können die aufnahmeseitigen Enden der Stützenpaare - wie auch bei der Anordnung im Sinne eines gedachten Dreiecks - zur Erzielung einer hohen Stabilität einen geringeren Abstand zueinander aufweisen als die basisteilseitigen Enden der Stützenpaare. Dabei könnte bspw. die Anordnung der basisteilseitigen Enden der Stützenpaare durch deren aufnahmeseitigen Enden wiederholt werden, nur eben mit geringeren Abständen.

Nach einer bevorzugten Variante können die aufnahmeseitigen Enden der beiden gegenüberliegenden Stützenpaare auch auf einer gedachten Linie, parallel zu den Lagerachsen der basisteilseitigen Enden der gegenüberliegenden Stützenpaare, eine fluchtende Reihe ausbilden. Auf diese Weise gelingt es, besonders platzsparende Aufnahmen für Objekte bereitzustellen.

Diese Varianten sind den Ansprüchen 15 bis 18 zu entnehmen.

Eine weitere vorteilhafte Ausgestaltung der Erfindung kann dahingehen, dass die aufnahmeseitigen Enden jedes der beiden gegenüberliegenden Stützenpaare zumindest teilweise eine gedachte, sich parallel zur Schwenkachse bzw. der ersten und zweiten Linie des basisteilseitigen Endes des jeweils gegenüberliegenden Stützenpaares erstreckende gedachte Linie übergreifen; dabei können die aufnahmeseitigen Enden der Stützen der gegenüberliegenden Stützenpaare beidseitig der gedachten vierten Linie liegen, wobei die Stützen der beiden Stützenpaare die gedachte vierte Linie überkreuzen.

Die stabilitätserhöhende Variante mit den die gedachte vierte Linie kreuzenden Stützen und auch die Variante der fluchtenden Reihe aus aufnahmeseitigen Enden setzen voraus, dass ein gewisser Abstand zwischen den aufnahmeseitigen und basisteilseitigen Enden eines Stützenpaares der beiden gegenüberliegenden Stützenpaare parallel zu den Lagerachsen vorhanden sein muss. Ist dieser nicht vorhanden, so sind wenigstens die gegenüberliegenden Stützenpaare parallel zur Lagerachse zu beabstanden.

Bei der in Rede stehenden vorteilhaften Ausführung der erfindungsgemäßen Vorrichtung mit zwei gegenüberliegenden Stützenpaaren und einem sich orthogonal hierzu erstreckenden Stützenpaar könnte das plattenförmige Basisteil rechteckig ausgebildet sein und ebenso die Aufnahme. In Betracht kommen auch kreis- oder ellipsenförmige oder auch beliebig geformte Aufnahmen als Werkstück- oder Werkzeugträger.

Alle Stützenpaare der bisher geschilderten Ausführungen könnten kostengünstig mit nur je einer Antriebs- und Steuereinheit beziehungsweise mit mindestens einer Antriebseinheit und zugehörigem Geber zur Erfassung der Antriebsposition ausgerüstet sein. Will man jedoch ein bezüglich Lageveränderungen besonders flexibles Verhalten und eine homogene Lastverteilung erzielen, so sieht eine weitere Variante vor, zumindest zwei Stützen eines Stützenpaares separat anzutreiben. Vorzugsweise könnte es sich bei dem Stützenpaar mit den beiden separat angetriebenen Stützen um das sich orthogonal zu den beiden gegenüberliegenden Stützenpaaren erstreckende Stützenpaar handeln. Hierdurch könnte beispielsweise eine Schwenkbewegung der Aufnahme herbeigeführt werden, um Biegemomenten entgegenzuwirken, die vom Objekt verursacht werden, oder es könnte eine gesteuerte Schenkbewegung auf das Objekt als zusätzliche Bewegungsmöglichkeit ausgeübt werden. Innerhalb eines definierten Bewegungsbereiches wird eine weitgehende Richtungsunabhängigkeit hergestellt.

Eine nächste vorteilhafte Ausführung der erfindungsgemäßen Vorrichtung befasst sich mit der Ausbildung des Basisteils in Form eines Körpers, an dessen Umfang das Stützenpaar oder mehrere Stützenpaare angeordnet ist bzw. sind. Dabei kann das Basisteil die Form eines Kubus aufweisen, wobei drei Seitenflächen des Kubus je ein Stützenpaar zugeordnet ist und diese sich näherungsweise orthogonal zueinander erstrecken. Hierdurch wird die Ausbildung der Aufnahme als räumliche Struktur, bspw. als rahmenförmiges Bauteil, möglich und damit eine Steigerung der Anwendbarkeit der erfindungsgemäßen Vorrichtung auf verschiedenste Erfordernisse räumlicher und objektgegebener Art. Das rahmenförmige Bauteil bietet gedankliche Anregungen im Bereich der Kraftfahrzeugtechnik, wo das Halten von Stoßstangen oder Prallstangen oftmals problematisch ist. Die Stützenpaare können auch mehr als drei Seiten des Kubus zugeordnet werden. Vorstellbar wären auch verschiedene Aufnahmen für bestimmte Stützpaare, verschiedene Funktionszuordnungen. Während an zwei Stützenpaaren Werkzeuge befestigt sind, können die übrigen Stützenpaare an ihrer gemeinsamen Aufnahme oder an ihren separaten Aufnahmen ein Bauteil halten.

Diese und weitere vorteilhafte Ausgestaltungen und Verbesserungen der Erfindung ergeben sich aus den weiteren Unteransprüchen.

Anhand der Zeichnung, in der einige Ausführungsbeispiele der Erfindung dargestellt sind, sollen die Erfindung sowie weitere vorteilhafte Ausgestaltungen und Verbesserungen und weitere Vorteile der Erfindung näher erläutert und beschrieben werden.

Es zeigen:
- Fig. 1: ein Basis-Schema für ein Stützenpaar der erfindungsgemäße Vorrichtung,
- Fig. 2: in perspektivischer Darstellung ein erstes Ausführungsbeispiel der erfindungsgemäßen Vorrichtung,
- Fig. 3: in vergrößerter, perspektivischer Darstellung, ein Detail aus Fig. 2, betreffend die aufnahmeseitigen Enden eines Stützenpaares,
- Fig. 4: eine Draufsicht auf die Vorrichtung gemäß Fig. 2,
- Fig. 5: in schematischer Darstellung, eine erste Variante des ersten Ausführungsbeispiels der erfindungsgemäßen Vorrichtung,
- Fig. 6: in schematischer Darstellung, ein Ausführungsbeispiel eines Positionierers entsprechend der in Fig. 5 gezeigten Variante,
- Fig. 7: in schematischer Darstellung, eine zweite Variante des ersten Ausführungsbeispiels der erfindungsgemäßen Vorrichtung,
- Fig. 8: in schematischer Darstellung, ein Ausführungsbeispiel gemäß der in Fig. 7 gezeigten Variante, entsprechend dem der Fig. 6,
- Fig. 9 bis 13: einige Varianten der erfindungsgemäßen Vorrichtung, in schematischer Darstellung,
- Fig. 14: in schematischer Darstellung, ein Ausführungsbeispiel eines Positionierers gemäß einer in den Fig. 9, 10, 11 gezeigten Variante,
- Fig. 15: in schematischer Darstellung, ein weiteres Ausführungsbeispiel in Seitenansicht
- Fig. 16: in schematischer Darstellung ein weiteres Ausführungsbeispiel in Vorderansicht und
- Fig. 17: in schematischer, räumlicher Darstellung, ein weiteres Ausführungsbeispiel der erfindungsgemäßen Vorrichtung.

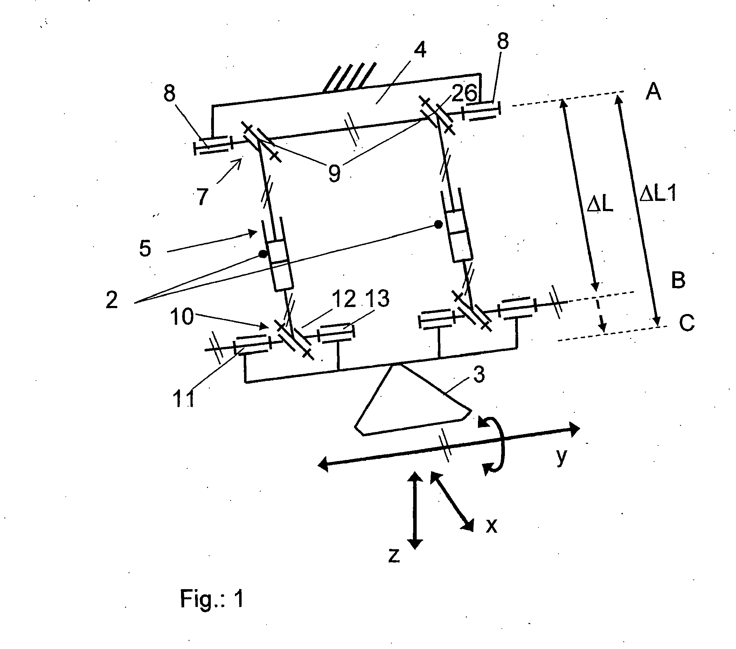

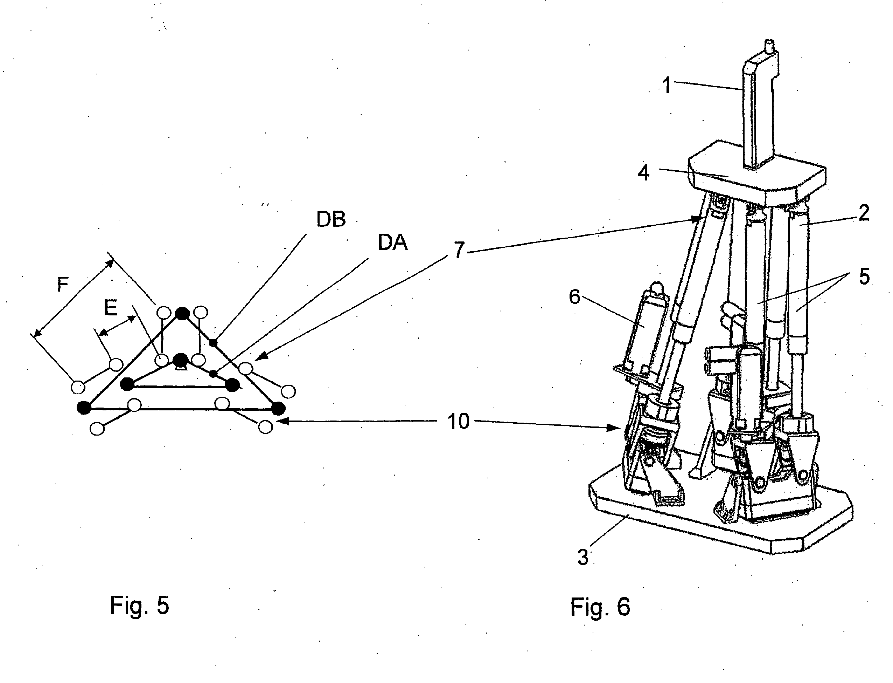

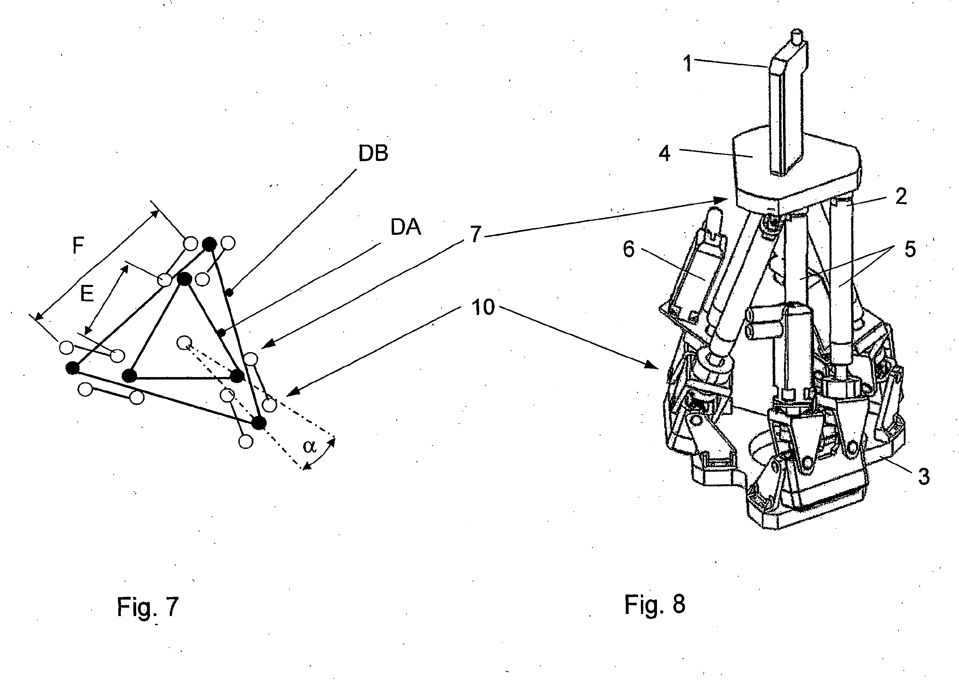

Die Figuren 1 bis 4, 6, 8, 12 bis 14 zeigen eine Vorrichtung zum Positionieren von Objekten 1 (siehe insbesondere Fig. 6, 8), mit längeneinstellbaren Stützen 2, mit einem Basisteil 3 und mit einer Aufnahme 4 für das Objekt 1. Die Stützen 2 sind zwischen dem Basisteil 3 und der Aufnahme 4 angeordnet und an diesen jeweils beweglich gelagert, wie weiter unten näher erläutert werden soll.

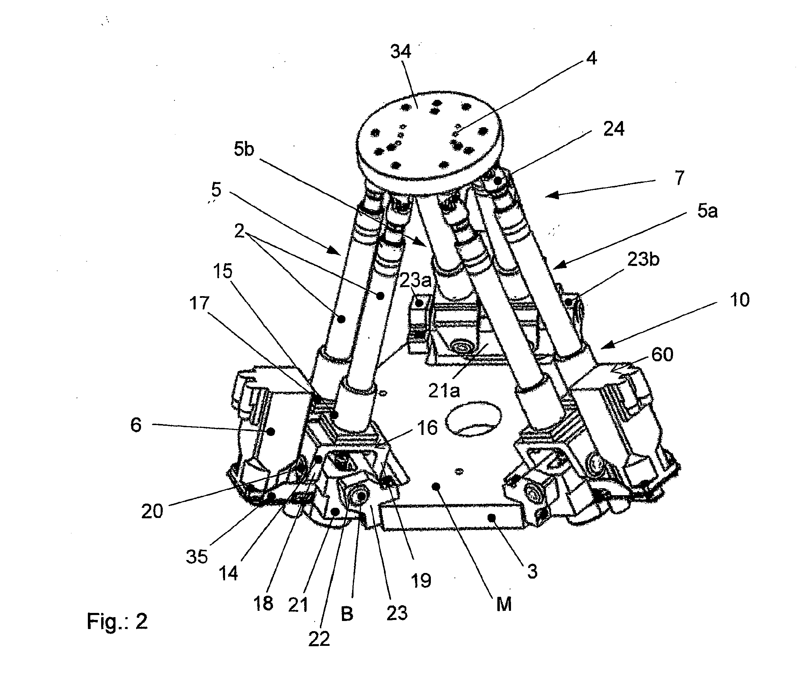

Im Folgenden wird das in Fig. 2 links befindliche Stützenpaar näher betrachtet; die beiden anderen Stützenpaare 5a, 5b sind gleich aufgebaut.

Erfindungsgemäß ist zumindest ein Stützenpaar 5 mit zwei parallel verlaufenden Stützen 2 vorgesehen. Das Stützenpaar 5 bildet, ebenso wie die anderen Stützenpaare, die Form eines Parallelogramms. Des weiteren ist erfindungsgemäß eine Antriebs- und Steuereinheit 6 vorgesehen; in der Antrieb und Steuerung zusammengefasst sind, siehe insbesondere Fig. 2. Wenigstens einer Antriebseinheit ist ein Geber zugeordnet, der der Erfassung der Antriebsposition dient.

Am aufnahmeseitigen Ende 7 der Stütze 2 sind zwei Schwenklager 8, 9 vorgesehen (siehe Fig. 1, in der die Vorrichtung schematisch dargestellt ist), welche Schwenklager 8 mit der Aufnahme fest verbunden sind, was bedeutet, dass der Abstand der Schwenklager 8 unveränderlich ist. Beide Schwenklager 8 des Stützenpaares 5 weisen eine gemeinsame Schwenkachse A auf. Am basisteilseitigen Ende 10 jeder Stütze 2 sind weitere Schwenklager 11, 12, 13 vorgesehen, von denen die Schwenklager 11, 13 eine Schwenkachse B besitzen. In der in Fig. 1 dargestellten Stellung ist der Abstand der Schwenkachsen 8 zu den Schwenkachsen 11, 13 mit ΔL bezeichnet. Durch Veränderung der Längen der Stützen 2 lässt sich der Abstand ΔL variieren, so dass der Abstand der Schwenkachsen 8; 11, 13 voneinander auf ΔL₁ vergrößert werden kann. Dies kann einmal dadurch erfolgen, dass bei quasi festgehaltenem Aufnahmeteil 4 das Basisteil 3 abgesenkt wird, so dass die Schwenkachsen 11, 13 auf der Linie C zu liegen kommen, und zum anderen dadurch, dass bei festgehaltenem Basisteil 3 das Aufnahmeteil 4 aus dem Abstand ΔL auf den Abstand ΔL₁ angehoben wird. Das Absenken des Basisteils 3 kann beispielsweise dann erfolgen, wenn an dem Objekt, welches am Aufnahmeteil 4 angebracht ist, noch gewisse Arbeiten vorgenommen werden sollen, somit das Aufnahmeteil 4 noch feststehend im Raum verbleiben muss. Im Normalfall allerdings ist das Basisteil 3 feststehend, und das Aufnahmeteil 4 bewegt sich.

Es wird Bezug genommen auf die Fig. 2.
Die in Fig. 2 dargestellte Vorrichtung 10 umfasst drei Stützenpaare 5, 5a, 5b, die im Wesentlichen gleich ausgebildet sind, wobei die Stützen 2 jedes Stützenpaares 5, 5a, 5b je eine Ebene aufspannen, die mit den jeweils anderen Ebenen ein Dreieck bildet. Die basisteilseitigen Enden der Stützen sind fest an U-förmigen ersten Lagerböcken 14, 15 befestigt und zwar auf der Außenseite jedes Quersteges 16, 17. An den Schenkeln 18, 19 jedes Lagerbockes 15, 16 (die Schenkel des Lagerbockes 15 sind verdeckt) sind je eine Drehachse 20 aufgenommen, die in einem Trägerbock 21 drehbar gelagert sind, der selbst wiederum über eine Achse 22 an fest mit dem Basisteil 3 verbundenen Stützböcken 23 gelagert ist. Die Achse 22 verläuft in der Ebene, die die Stützen des Stützenpaares 5 aufspannen, oder parallel dazu und darüber hinaus auch parallel zur Ebene des Basisteils. Wie aus der Fig. 2 insbesondere für das Stützenpaar 5b ersichtlich ist, sind zwei Stützböcke 23a und 23b vorgesehen, in denen die Achse 22 drehbar gelagert ist; über die Achse 22 ist der Trägerbock 21 drehbar gelagert, der sich zwischen den Stützböcken 23a, 23b befindet, und an diesem Trägerbock 21 sind die Lagerböcke 14, 15 schwenkbar gelagert, wobei die Schwenkachsen 20 oder Achsen 20 quer oder senkrecht zu der Achse 22 verlaufen. Zusammen können die Stützböcke 23a, 23b, der Trägerbock 21 und die Lagerböcke 14, 15 mit den Schwenkachsen 20 und 22 ein kombiniertes Universalgelenk für ein Stützenpaar 5, 5a, 5b ausbilden. Alternativ können zur Ausbildung der gewünschten Beweglichkeit auch zwei einzelne Universalgelenke eingesetzt werden, deren Schwenkachsen dann kinematisch äquivalent zu den Schwenkachsen 20 und 22 ausgerichtet sein müssen. Für jedes der drei Stützenpaare 5, 5a, 5b ist lediglich eine Antriebs- und Steuereinheit 6 oder mindestens eine Antriebseinheit mit zugeordnetem Geber zur Erfassung der Antriebsposition 6 vorgesehen, wobei die beiden Stützen 2 jedes Stützenpaares 5, 5a und 5b mit der Antriebs- und Steuereinheit synchronisiert sind. Die Parallelität der beiden Stützen 2 aller Stützenpaare 5, 5a und 5b wird dadurch herbeigeführt, dass der Abstand der basisteilseitigen Enden 10 und der aufnahmeseitigen Enden 7 der beiden Stützen 2 aller Stützenpaare jeweils gleich ist.

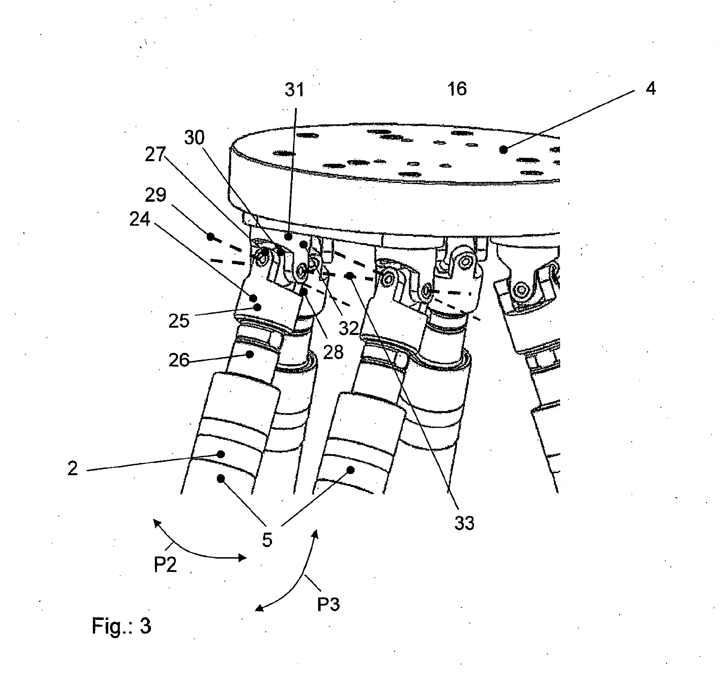

Die Verbindung der Stützen 2 jedes Stützenpaares 5, 5a und 5b mit dem Aufnahmeteil 4 erfolgt über jeweils ein Universalgelenk 24, welches an Hand der Fig. 3 näher erläutert wird. Das Universalgelenk 24 umfasst ein erstes Gelenkteil 25, welches mit dem ausfahrbaren Abschnitt 26 jeder Stütze fest verbunden ist. An distal sich gegenüberliegenden Mantellinien des ersten Gelenkteils 25 sind Laschen 27, 28 angeordnet, hier angeformt, die eine Schwenkachse 29 aufnehmen, um die ein sich zwischen den Laschen 27, 28 befindliches Kardangelenkkreuz 30 drehen kann. An dem Aufnahmeteil 4 ist ein zweites Gelenkteil 31 befestigt, welches den Laschen 27, 28 entsprechende Laschen 32 aufweist, welche zum ersten Gelenkteil 25 hin vorspringen, d. h. also vom Aufnahmeteil 4 weg. Das Kardangelenkkreuz 30 befindet sich auch zwischen den beiden Laschen 32 und ist an diesen über eine Achse 33 schwenkbar gelagert, wobei die Achsen 29 und 33 senkrecht zueinander verlaufen und sich entweder in einem Punkt schneiden können oder sich in einem definierten Abstand zueinander schneiden. Alternativ können beide Universalgelenke zu einem kombinierten Universalgelenk zusammengefasst werden, in dem die beiden Kardangelenkkreuze auf ihrer gemeinsamen Schwenkachse 33 steif miteinander gekoppelt werden oder beide Kardangelenkkreuze 30 in einem Bauteil zusammengefasst werden, ähnlich dem Trägerbock 21. Damit kann sich die Stütze 2 in Doppelpfeilrichtung P₂ um die Achse 29 und zusammen mit dem Kardangelenkkreuz 30 um die senkrecht dazu verlaufende Achse 33 P₃ senkrecht zu der durch die beiden Stützen 2 aufgespannten Ebene, d. h. auf diese zu und von dieser weg, verschwenken. Das Basisteil 3 (Fig. 2), ist im Sinne einer sechseckigen Plattform ausgebildet; die Aufnahme 4 ist als kreisförmige Plattform mit Montageöffnungen 34 ausgebildet.

Am basisteilseitigen Ende der Stützen 2 bzw. des Stützenpaares 5a ist pro Stütze 2, wie oben dargestellt, ein Schwenklager 15, 16 vorgesehen, deren Abstand dem Abstand der beiden Universalgelenke 24 am aufnahmeseitigen Ende 7 der Stützen 2 entspricht. Die Schwenklager 15, 16 sind mit ihren Lagerachsen so gelagert, dass sie senkrecht zur Schwenkachse 22 verschwenkbar sind. Die Schwenkachse 22 liegt dabei tangential an einem gedachten Kreis an, der sich um den Mittelpunkt M des Basisteils 3 erstreckt und dessen Radius durch die Schwenkachse 22 bestimmt ist. An dem Trägerbock 21 ist ein Träger 35 angebracht, auf dem die Antriebs- und Steuereinheit 6 befestigt ist, so dass sich die Antriebs- und Steuereinheit 6 zusammen mit dem Trägerbock 21 verschwenken kann.

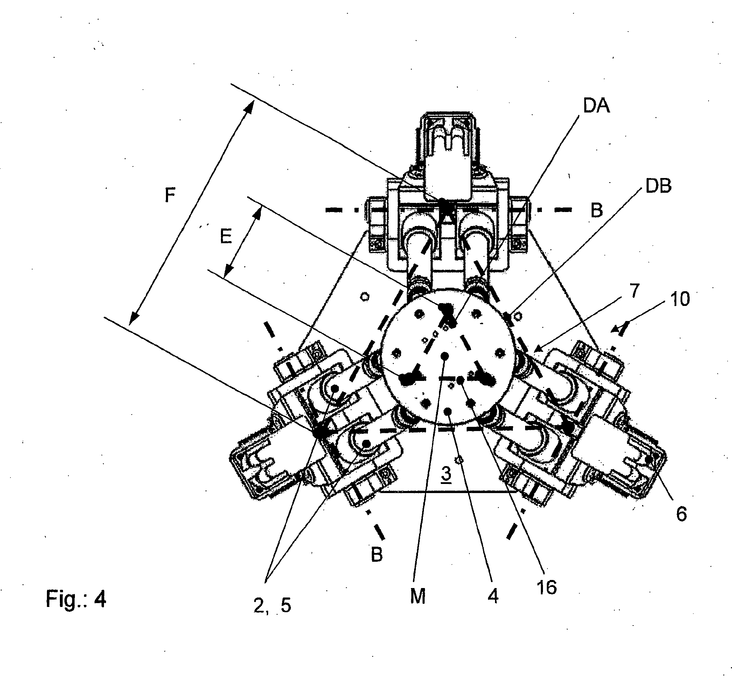

Aus Fig. 4 ist ersichtlich, dass die basisteilseitigen Enden 10 und die aufnahmeseitigen Enden 7 der drei Stützenpaare 5 jeweils im Sinne eines gedachten, insbesondere in Fig. 4 gestrichelt dargestellten Dreiecks DA und DB angeordnet sind.

Weiter oben ist dargestellt, dass die Stützenpaare jeweils einer Ebene aufspannen, die jeweils ein Dreieck miteinander bilden. Dabei ist das Dreieck an den basisteilseitigen Enden der Stützenpaare 5, 5a, 5b größer als das Dreieck, das die Ebenen am aufnahmeteilseitigen Ende der Stützenpaare 5, 5a und 5b miteinander bilden. Bei der Darstellung und Erläuterung zu Fig. 4, was auch für die folgenden Darstellung gilt, sind die gedachten Dreiecke dadurch gebildet, dass die Stützenpaare jeweils als Einheit aufgefasst werden, die einen gemeinsamen Mittelpunkt im Bereich der basisteilseitigen Enden und der aufnahmeseitigen Enden besitzen; diese Mittelpunkte bilden dann jeweils das Dreieck DA, DB, welche Dreiecke gegenüber den durch die Ebenen der Stützenpaare gebildeten Dreiecken um 60° verschwenkt sind. Der Abstand E der benachbarten aufnahmeseitigen Enden 7 der drei Stützenpaare 5 ist geringer ist als der Abstand F der benachbarten basisteilseitigen Enden 10 der drei Stützenpaare 5. Anders ausgedrückt: Die Seitenlänge E des aufnahmeseitigen Dreiecks DA ist kleiner als die Seitenlänge F des basisteilseitigen Dreiecks. Die Aufnahme 4 ist flächenmäßig kleiner als das Basisteil 3. Die Dreiecke DA und DB sowie die Abstände E und F sind auch den Fig. 5 und 7 betreffend die zweite und dritte Variante des ersten Ausführungsbeispiels zu entnehmen. Die Flächenverhältnisse der Aufnahme 4 zum Basisteil 3 sind in den Fig. 6 und 8 dargestellt. Dort sind in den Beispielpositionen auch die unterschiedlichen Raumverhältnissen gerecht werdenden Geometrien der Aufnahme 4 und des Basisteils 3 ersichtlich sowie das Objekt 1 in Form eines Werkzeuges auf der als Plattform ausgebildeten Aufnahme 4.

Die erste (Fig. 4) und dritte Variante (Fig. 7) des ersten Ausführungsbeispiels zeigen die Ausbildung jeweils eines gleichseitigen gedachten Dreiecks DA, DB und die entsprechende Anordnung der drei Stützenpaare 5, siehe Fig. 7. Bei der zweiten Variante sind die beiden gedachten gedachte Dreiecke DA, DB gleichschenklig ausgebildet, siehe Fig. 5.

Die dritte Variante unterscheidet sich von der ersten Variante des ersten Ausführungsbeispiels dadurch, dass das durch die basisteilseitigen Enden 10 gebildete gedachte Dreieck DB und das durch die aufnahmeseitigen Enden 7 gebildete gedachte Dreieck DA zueinander verdreht sind, wie aus der Fig. 7 zu entnehmen. Mit a ist der Verdrehwinkel zwischen dem aufnahmeseitigen Ende 7 und dem basisteilseitigen Ende 10 bezeichnet. Die nicht näher bezeichneten Eckpunkte der gedachten Dreiecke in den Fig. 4, 5, 7 sollen die Mitte zwischen den konstant beabstandeten Stützen 2 jedes Stützenpaares 5 sowohl an dessen aufnahmeseitigen Ende 7 als auch an dessen basisteilseitigen Ende 10 verdeutlichen.

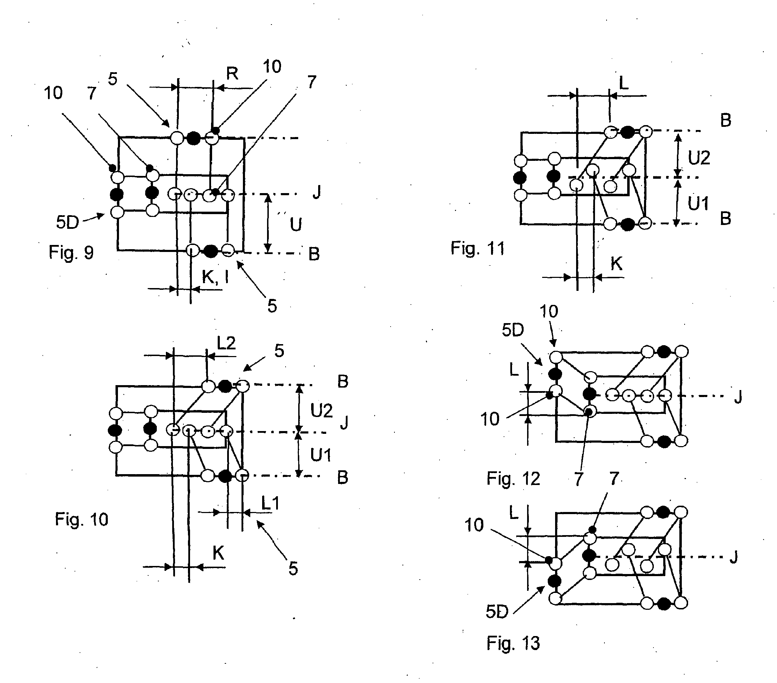

Bei dem in den Fig. 9 bis 11, 10a und 11a gezeigten zweiten Ausführungsbeispiel sind ebenfalls drei Stützenpaare 5 vorgesehen, jedoch ist die Anordnung der drei Stützenpaare zueinander anders als beim ersten Ausführungsbeispiel. Die basisteilseitigen Enden 10 zweier Stützenpaare 5 sind gegenüberliegend angeordnet. Das dritte Stützenpaar 5D erstreckt sich orthogonal zu den beiden gegenüberliegenden zwei Stützenpaaren 5. Die in Fig. 9 gezeigte Variante verdeutlicht bei 1 den Abstand I der beiden basisteilseitigen Enden 10 der gegenüberliegenden Stützenpaare 5 in Richtung ihrer parallelen Schwenkachsen B. Bei den in den Fig. 10 und 11 gezeigten Varianten ist kein Abstand I vorhanden, da dort keine Versetzung der basisteilseitigen Enden 10 stattfindet, sondern eine symmetrische Anordnung zu einer gedachten Linie J vorliegt.

Auch bei dem zweiten Ausführungsbeispiel kann das aufnahmeseitige Ende 7 des einen Stützenpaares 5 einen geringeren Abstand F zum anderen aufnahmeseitigen Ende des nächsten Stützenpaares 5 aufweisen als die die entsprechenden basisteilseitigen Enden 10 der Stützenpaare 5 mit dem Abstand E, was aber aus Übersichtlichkeitsgründen nicht dargestellt ist.

Gemäß den in den Fig. 9 und 10 gezeigten ersten und zweiten Varianten des zweiten Ausführungsbeispiels bilden die aufnahmeseitigen Enden 7 der beiden gegenüberliegenden Stützenpaare 5 auf der gedachten Linie J, parallel zu den Schwenkachsen B der basisteilseitigen Enden 10 der gegenüberliegenden Stützenpaare 5 eine fluchtende Reihe aus.

Bei der Ausführung gemäß Fig. 9 verlaufen die Stützen der Stützpaare 5, die sich gegenüberliegen, parallel zueinander und senkrecht zu der gedachten Linie J; die Stützen des Stützpaares 5D verlaufen dann parallel zur Linie J.

Bei der Ausführung gemäß der Fig. 10 verlaufen die Stützen der sich gegenüberliegenden Stützpaare 5 unter einem Winkel zu der gedachten Linie J, so dass die basisteilseitigen Enden 10 zu den aufnahmeteilseitigen Enden 7 einen Abstand L₁ zwischen sich einnehmen, gemessen in Richtung der gedachten Linie J. Die aufnahmeteilseitigen Enden 7, die einander auf der Linie J benachbart liegen, besitzen einen Abstand K.

Die in Fig. 11 dargestellte dritte Variante verfügt über zwei gegenüberliegende Stützenpaare 5 mit aufnahmeseitige Enden 7, die die gedachte Linie J parallel zur Lagerachse B der basisteilseitigen Enden 10 des jeweils gegenüberliegenden Stützenpaares 5 übergreifen. Außerdem weisen die aufnahmeseitige Enden 7 einen Abstand K parallel zur gedachten Linie J auf. Der Abstand K ist bei allen Varianten des zweiten Ausführungsbeispiels gleich. Der Unterschied zwischen erster und zweiter Variante besteht wiederum darin, dass in Fig. 9 die Abstände I und K den gleichen Betrag aufweisen, während der Abstand I in Fig. 10, aber auch in Fig. 11 Null ist. Bei dem Beispiel gemäß Fig. 9 ist der Abstand L zwischen dem basisteilseitigen und dem aufnahmeteilseitigen Ende je der Stütze eines Stützenpaares Null.

Bei der dritten Variante des zweiten Ausführungsbeispiels kreuzen sich die aufnahmeseitigen Enden 7 der beiden gegenüberliegenden Stützenpaare 5, ohne den Aktionsbereich des jeweils anderen Stützenpaares 5 zu beeinträchtigen.

Die Fig. 12 zeigt eine aus der Fig. 9 entstandene Variante. Hierbei ist zwischen dem basisteilseitigen Ende 10 und dem aufnahmeteilseitigen Ende 7 des Stützenpaares 5D ein Abstand L vorhanden, der senkrecht zur Linie J gemessen ist.

Die Ausführung gemäß Fig. 13 ist eine Variante zur Ausführung gemäß Fig. 11, wobei hier ebenfalls ein Abstand L zwischen dem basisteilseitigen Ende 10 und dem aufnahmeteilseitigen Ende 7 jeder Stütze des Stützenpaares 5b vorgesehen ist, der senkrecht zu der gedachten Linie J gemessen ist.

Bei den Ausführungen der Figuren 9 bis 13 sind im Wesentlichen die gleichen Bezugsziffern verwendet worden, ebenso wie für alle Abstände die Bezeichnung L, wobei die Abstände L bei den einzelnen Varianten der Figuren 9 bis 13 durchaus unterschiedlich sein können, was auch für die Bemessung der Abstände K gilt. Nachzutragen ist noch, dass die Abstände der Schwenkachsen B zu der gedachten Linie J in der Fig. 9 mit U, in der Fig. 10 und 11 mit U₁ und U₂ bezeichnet ist, um anzudeuten, dass gegebenenfalls diese Abstände auch variieren und unterschiedlich sein können.

Um verschiedene Lastaufnahmen zu ermöglichen, werden verschiedene Positionen eingenommen. Dabei kann - wie in der ersten Variante gezeigt - innerhalb eines Stützenpaares eine gegenüberliegende Anordnung oder, wie in der zweiten und dritten Variante gezeigt - eine versetzt gegenüberliegende Anordnung des aufnahmeseitigen Endes 5 zum basisteilseitigen Ende 10 erfolgen. Bei der zweiten und dritten Variante des zweiten Ausführungsbeispieles ist daher ein Abstand L zwischen dem aufnahmeseitigen Ende 7 und dem basisteilseitigen Enden 10 eines Stützenpaares 5 existent, bei der erste Variante des zweiten Ausführungsbeispieles dagegen nicht. Auf den gegenüberliegenden Stützenpaaren kann der Abstand L entweder jeweils mit gleichem Betrag oder auch je Stützenpaar mit unterschiedlichem Betrag ausgeführt sein, wie oben schon angedeutet. Das gleichen gilt auch für die Abstände U, U₁ und U₂. Desweiteren kann auch an dem dritten orthogonal angeordneten Stützenpaar ein Abstand L zwischen dem aufnahmeseitigen Ende und dem basisteilseitigen Ende eines Stützenpaaren möglich sein, wie in der Fig. 12 und 13 dargestellt.

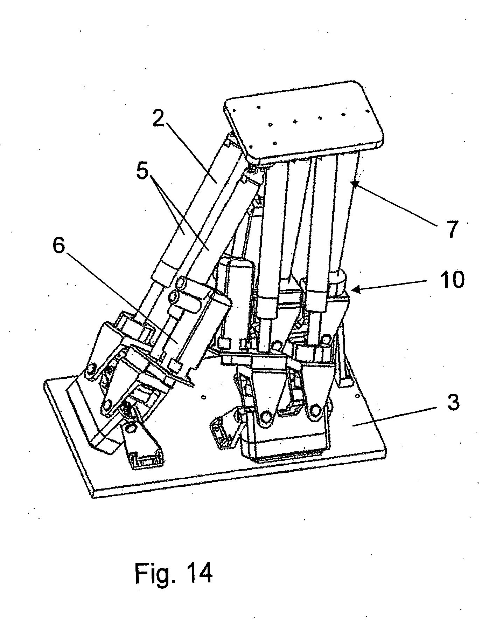

Der beispielhaft gezeigte Positionierer gemäß Fig. 14 zeigt, dass das plattenförmige Basisteil 3 rechteckig ausgebildet ist und dass die Aufnahme 4 ebenfalls plattenförmig und rechteckig ausgebildet ist.

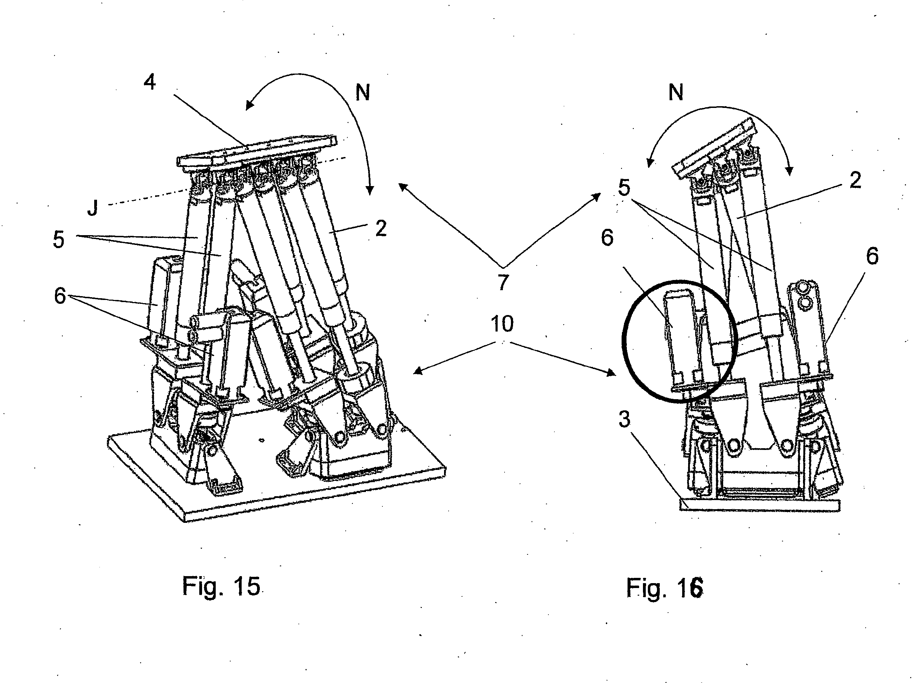

Zwei weitere Ausgestaltungen von Positionierern (Figuren 15 und 16) veranschaulichen eine vierte Variante des zweiten Ausführungsbeispiels. Abweichend sind hier die beiden Stützen 2 des sich orthogonal zu den beiden gegenüberliegenden Stützenpaaren 5 erstreckenden Stützenpaares 5 separat angetrieben und weisen jeweils eine eigene Antriebs- und Steuereinheit 6 oder mindestens eine Antriebseinheit mit zugeordnetem Geber zur Erfassung der Antriebsposition auf, die durch einen Kreis in Fig. 13b hervorgehoben ist. Hierdurch kann die mit Pfeil N bezeichnete Kipp- oder Schwenkbewegung realisiert werden. Die Anordnung der Stützenpaare 5 entspricht der ersten Variante gemäß Fig. 9 mit versetzten basisteilseitigen Enden 10 und Anordnung der aufnahmeseitigen Enden 7 der gegenüberliegenden Stützenpaare 5 in fluchtender Reihe.

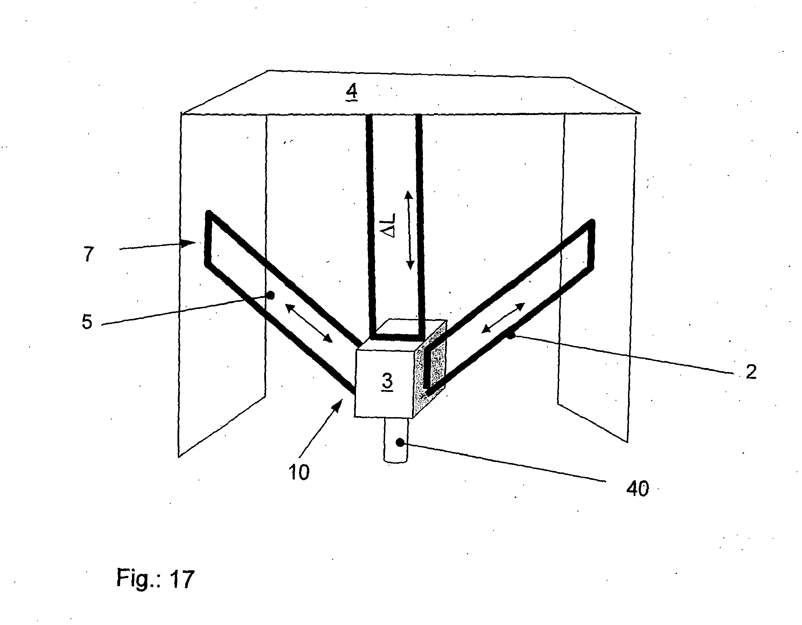

Schließlich zeigt Fig. 17 schematisch ein drittes Ausführungsbeispiel der erfindungsgemäßen Vorrichtung, wobei das Basisteil 3 die Form eines Kubus aufweist. An drei von fünf möglichen Seitenflächen des Kubus ist jeweils ein Stützenpaar 5 angeordnet. An der sechsten Seitenfläche des Kubus ist eine Halterung 40 für das Basisteil 3 angeordnet. Die Aufnahme 4 ist in Form eines rahmenförmigen Bauteiles ausgebildet, das sich räumlich erstreckt und mit den aufnahmeseitigen Enden der drei Stützenpaare 5 verbunden ist.

Abschließend sei darauf hingewiesen, dass die erfindungsgemäße Lehre nicht auf die voranstehend erörterten Ausführungsbeispiele eingeschränkt ist. Vielmehr sind die unterschiedlichsten Ausbildungen der Basisteile und Aufnahmen in platzsparenden Polygonformen oder unterschiedlichen Raumdimensionen möglich. Auch im Hinblick auf die Synchronisation der Stützen 2, die Kraftübertragung von der Antriebs- und Steuereinheit 6 auf die Stützen 2 stehen prinzipiell viele Möglichkeiten offen.

Es soll nochmals festgehalten sein, dass die basisteilseitigen Enden und die aufnahmeseitigen Enden der Stützen jeweils eines Stützenpaares den gleichen Abstand besitzen, der nicht veränderbar ist.

### Bezugszeichenliste

- 1: Objekt
- 2: Stütze
- 3: Basisteil
- 4: Aufnahme
- 5: Stützenpaar
- 6: Antriebs- und Steuereinheit
- 7: aufnahmeseitiges Ende
- 8: Schwenklager
- 9: Schwenklager
- 10: basisteiliges Ende
- 11: Schwenklager
- 12: Schwenklager
- 13: Schwenklager
- 14: Universalgelenk
- 15: Verbindungsbauteil
- 16: Montageöffnung
- 17: Verbindungsbauteil
- 18: Tragteil
- 19: Halterung

- Δl: Abstand, Längenänderung
- x,y,z: räumliche Dimensionen
- A: Schwenkachse
- B: Schwenkachse
- C: Schwenkachse - geänderte Position
- DA: gedachtes Dreieck
- DB: gedachtes Dreieck
- E: Abstand
- F: Abstand
- G: Gelenkachse
- H: Gelenkachse
- a: Verdrehwinkel
- I: Abstand
- J: gedachte Linie
- K: Abstand
- L: Abstand
- M: Mittelpunkt
- N: Pfeil

## Patentansprüche

1. Vorrichtung insbesondere zum Positionieren von Objekten (1),
mit längeneinstellbaren Stützen (2),
mit einem Basisteil (3),
mit einer Aufnahme (4) für das Objekt (1),
wobei die Stützen (2) zwischen dem Basisteil (3) und der Aufnahme (4) angeordnet und dort jeweils beweglich gelagert sind, und
mit Antrieb und Steuerung zur Einstellung der Stützen (2), nach Patent DE 10 2006 011 823.5,
**dadurch gekennzeichnet,**
**dass** zumindest ein Stützenpaar (5) aus zwei Stützen (2) gebildet ist, die parallel ineinander verlaufen und miteinander die Form eines Parallelogramms bilden.

2. Vorrichtung nach Anspruch 1, **dadurch gekennzeichnet, dass** wenigstens eine Stütze (2) wenigstens eines Stützenpaares (5) mit einer Antriebs- und Steuereinrichtung (6) oder zumindest einer Antriebseinheit mit einem dieser zugeordneten Geber zur Erfassung der Antriebsposition zur Längeneineinstellung ansteuerbar ist.

3. Vorrichtung nach Anspruch 2, **dadurch gekennzeichnet, dass** der wenigstens einen Stütze (2) die Antriebeinrichtung (6) räumlich zugeordnet und mit dieser bewegbar ist.

4. Vorrichtung nach Anspruch 2 oder 3, **dadurch gekennzeichnet, dass** die Antriebs- und Steuereinrichtung (6) eine räumliche Einheit bilden.

5. Vorrichtung nach Anspruch 2 oder 3, **dadurch gekennzeichnet, dass** die Steuereinrichtung räumlich von der Antriebseinrichtung getrennt angeordnet, gegebenenfalls in einem Schaltschrank untergebracht ist.

6. Vorrichtung nach einem der Ansprüche 2 bis 5, **dadurch gekennzeichnet, dass** die beiden Stützen (2) des wenigstens einen Stützenpaares (5) mit der Antriebs- und Steuereinheit (6) synchronisiert sind.

7. Vorrichtung nach einem der Ansprüche 1 bis 6, **dadurch gekennzeichnet, dass** die Aufnahme (4) mit dem aufnahmeseitigen Ende (7) des wenigstens einen Stützenpaares (5) gelenkig und unverschiebbar verbunden ist.

8. Vorrichtung nach einem der Ansprüche 1 bis 7, **dadurch gekennzeichnet, dass** das Basisteil (3) als Plattform oder als Tragwerk ausgebildet ist, auf deren Oberseite das wenigstens eine Stützenpaar (5) angeordnet ist.

9. Vorrichtung nach einem der Ansprüche 1 bis 8, **dadurch gekennzeichnet, dass** drei Stützenpaare (5) vorgesehen sind.

10. Vorrichtung nach Anspruch 9, **dadurch gekennzeichnet, dass** die basisteilseitigen Enden (10) und die aufnahmeseitigen Enden (7) der drei Stützenpaare (5) jeweils im Sinne eines gedachten Dreiecks (DA, DB) angeordnet sind.

11. Vorrichtung nach Anspruch 10, **dadurch gekennzeichnet, dass** der Abstand (E) der aufnahmeseitigen Enden (7) von wenigstens drei Stützenpaaren (5) geringer ist als der Abstand (F) der basisteilseitigen Enden (10) der drei Stützenpaare (5).

12. Vorrichtung nach Anspruch 10 oder 11, **dadurch gekennzeichnet, dass** das gedachte Dreieck (DA, DB) gleichseitig ist.

13. Vorrichtung nach einem der Ansprüche 10 oder 11, **dadurch gekennzeichnet, dass** das gedachte Dreieck (DA, DB) gleichschenklig ist.

14. Vorrichtung nach einem der Ansprüche 10 bis 13, **dadurch gekennzeichnet, dass** das durch die basisteilseitigen Enden (10) gebildete gedachte Dreieck (DB) und das durch die aufnahmeseitigen Enden (7) gebildete gedachte Dreieck (DA) zueinander verdreht sind.

15. Vorrichtung nach Anspruch 8 oder 9, wobei mindestens drei Stützenpaare vorgesehen sind, **dadurch gekennzeichnet, dass** die basisteilseitigen Enden (10) zumindest zweier Stützenpaare (5) sich gegenüber liegend auf einer ersten und zweiten Linie, die parallel zueinander verlaufen, und die basisteilseitigen Enden des dritten Stützpaares auf einer dritten Linie liegen, die senkrecht zu der ersten und zweiten Linie verläuft.

16. Vorrichtung nach Anspruch 15, **dadurch gekennzeichnet, dass** zumindest die basisteilseitigen Enden (10) der gegenüberliegenden Stützenpaare (5) in Richtung ihrer parallelen Schwenkachsen (B) oder der ersten und zweiten Linie zueinander beabstandet sind.

17. Vorrichtung nach einem der Ansprüche 1 bis 16, **dadurch gekennzeichnet, dass** die aufnahmeseitigen Enden (7) der Stützenpaare (5) einen geringeren Abstand zueinander aufweisen als die basisteilseitigen Enden (10) der Stützenpaare (5).

18. Vorrichtung nach Anspruch 17, **dadurch gekennzeichnet, dass** die aufnahmeseitigen Enden (7) der beiden gegenüberliegenden Stützenpaare (5) auf einer gedachten Linie (J) parallel zu der ersten und zweiten Linie der basisteilseitigen Enden (10) der gegenüberliegenden Stützenpaare (5) eine fluchtende Reihe ausbilden (Fig. 9, 10, 12).

19. Vorrichtung nach Anspruch 17, **dadurch gekennzeichnet, dass** das aufnahmeseitigen Enden (7) jedes der beiden gegenüberliegenden Stützenpaare (5) zumindest teilweise eine gedachte, sich parallel zur Schwenkachse (B) bzw. der ersten und zweiten Linie des basisteilseitigen Endes (10) des jeweils gegenüberliegenden Stützenpaares (5) erstreckende gedachte Linie (J) übergreifen (Fig. 11).

20. Vorrichtung nach Anspruch 19, **dadurch gekennzeichnet, dass** sich die aufnahmeseitigen Enden (7) der beiden gegenüberliegenden Stützenpaare (5) zumindest bezüglich einer Stütze (2) kreuzen, ohne den Aktionsbereich des jeweils anderen Stützenpaares (5) in einem festgelegten Arbeitsbereich zu beeinträchtigen.

21. Vorrichtung nach Anspruch 20, **dadurch gekennzeichnet, dass** die aufnahmeseitigen Enden (7) der Stützen (2) der gegenüberliegenden Stützenpaare (5) beidseitig einer gedachten vierten Linie (J) liegen, wobei die Stützen (2) der beiden Stützenpaare die gedachte vierte Linie (J) überkreuzen (Fig. 11).

22. Vorrichtung nach einem der Ansprüche 15 bis 21, **dadurch gekennzeichnet, dass** der Abstand (L) zwischen dem aufnahmeseitigen Ende (7) und dem basisteilseitigen Ende (7) eines Stützenpaares (5) der beiden gegenüberliegenden Stützenpaare (5) in Richtung deren Schwenkachsen (B) gesehen gleich Null ist.

23. Vorrichtung nach einem der Ansprüche 15 bis 21, **dadurch gekennzeichnet, dass** das aufnahmeseitige Ende (7) eines Stützenpaares (5) der beiden gegenüberliegenden Stützenpaare (5) einen Abstand (L) in Richtung der Schwenkachse (B) des basisteilseitigen Endes (10) desselben Stützenpaares (5) gesehen aufweist (Fig. 11).

24. Vorrichtung nach einem der Ansprüche 15 bis 23, **dadurch gekennzeichnet, dass** das plattenförmige Basisteil (3) rechteckig ausgebildet ist und dass die Aufnahme (4) ebenfalls plattenförmig und rechteckig ausgebildet ist.

25. Vorrichtung nach einem der Ansprüche 15 bis 24, **dadurch gekennzeichnet, dass** zumindest die beiden Stützen (2) wenigstens eines Stützenpaares (5) separat angetrieben sind.

26. Vorrichtung nach Anspruch 25, **dadurch gekennzeichnet, dass** die beiden separat angetriebenen Stützen (2) diejenigen sind, deren Stützenpaar (5) orthogonal zu den beiden gegenüberliegenden Stützenpaaren (5) verlaufen.

27. Vorrichtung nach einem der Ansprüche 1 bis 8, **dadurch gekennzeichnet, dass** das Basisteil (3) in Form eines Körpers ausgebildet ist, an dessen Umfang die Stützenpaare (5) angeordnet sind.

28. Vorrichtung nach Anspruch 27, **dadurch gekennzeichnet, dass** das Basisteil (3) die Form eines Kubus aufweist.

29. Vorrichtung nach Anspruch 28, **dadurch gekennzeichnet, dass** drei Seitenflächen des Kubus je ein Stützenpaar (5) zugeordnet ist, wobei sich die Stützenpaare (5) mindestens in einer Position im Arbeitsbereich orthogonal zueinander erstrecken.

30. Vorrichtung nach einem der Ansprüche 27 bis 29, **dadurch gekennzeichnet, dass** die Aufnahme (4) die Form eines rahmenförmigen Bauteiles aufweist.

31. Vorrichtung nach einem der Ansprüche 15 bis 21, **dadurch gekennzeichnet, dass** das aufnahmeseitige Ende (7) eines Stützenpaares (5) der beiden gegenüberliegenden Stützenpaare (5) einen Abstand (L) in Richtung der Schwenkachse (B) des basisteilseitigen Endes (10) desselben Stützenpaares (5) aufweist, wobei der Abstand (11) für jedes Stützenpaar mit unterschiedlichem Betrag bemessen ist.

32. Vorrichtung nach einem der Ansprüche 15 bis 21 und 31, **dadurch gekennzeichnet, dass** der Abstand (U) zwischen den Fußpunkten der aufnahmeseitigen und basisteilseitigen Enden gegenüber der gedachten Linie (J) an beiden gegenüberliegenden Stützenpaaren entweder mit gleichen oder unterschiedlichen Beträgen bemessen ist.
